# EUROPÄISCHE PATENTSCHRIFT

(11) **EP 3 663 963 B1**
(45) Veröffentlichungstag und Bekanntmachung des Hinweises auf die Patenterteilung: **10.03.2021**
(21) Anmeldenummer: 18209953.1
(22) Anmeldetag: 04.12.2018
(51) Int. Cl.: G06K 7/10

(54) **LESEN VON OPTISCHEN CODES**
READING OF OPTICAL CODES
LECTURE DE CODES OPTIQUES

(43) Veröffentlichungstag der Anmeldung: 10.06.2020
(73) Patentinhaber: SICK AG, 79183 Waldkirch (DE)
(72) Erfinder: Müller, Dr. Romain, 79252 Stegen (DE); Schneider, Dr. Florian, 79276 Reute (DE)

(56) Entgegenhaltungen:
- EP-B1- 2 838 069
- DELBRUCKL TOBI: "Neuromorophic vision sensing and processing", ESSCIRC CONFERENCE 2016: 42ND EUROPEAN SOLID-STATE CIRCUITS CONFERENCE, IEEE, 12. September 2016 (2016-09-12), Seiten 7-14, XP032980798, DOI: 10.1109/ESSCIRC.2016.7598232 [gefunden am 2016-10-18]
- GUILLERMO GALLEGO ET AL: "A Unifying Contrast Maximization Framework for Event Cameras, with Applications to Motion, Depth, and Optical Flow Estimation", ARXIV.ORG, CORNELL UNIVERSITY LIBRARY, 201 OLIN LIBRARY CORNELL UNIVERSITY ITHACA, NY 14853, 4. April 2018 (2018-04-04), XP081136405, DOI: 10.1109/CVPR.2018.00407

## Beschreibung

Die Erfindung betrifft ein Verfahren zum Lesen von optischen Codes nach dem Oberbegriff von Anspruch 1 sowie einen entsprechenden kamerabasierten Codeleser.

Optische Codes sind weitverbreitet, um ein Objekt mit Informationen zu versehen und um diese zu einem späteren Zeitpunkt wieder auszulesen. Codeleser sind von Supermarktkassen, zur automatischen Paketidentifikation, Sortierung von Postsendungen, von der Gepäckabfertigung in Flughäfen und aus anderen Logistikanwendungen bekannt.

In einem Codescanner wird ein Lesestrahl mittels eines Drehspiegels oder eines Polygonspiegelrads quer über den Code geführt, und durch diese Abtastung werden mittels eines Detektors Helligkeits- beziehungsweise Intensitätsunterschiede und aus diesem Helligkeitsprofil die Codeinformationen gewonnen. Ein kamerabasierter Codeleser nimmt mit einem Bildsensor Bilder der Objekte mit den darauf befindlichen Codes auf, und eine Bildauswertungssoftware extrahiert aus diesen Bildern die Codeinformation. Eine Matrixkamera erzeugt unmittelbar ein zweidimensionales Bild, während eine Zeilenkamera ein bewegtes Objekt zeilenweise erfasst und so nach und nach ebenfalls ein zweidimensionales Bild zusammensetzt. Das Bild wird dann segmentiert, um herauszufinden, ob ein Code in dem Bild erkennbar ist, und in diesem Falle wird der Code ausgelesen. Ein Codescanner hat eine größere Tiefenschärfe, liest dafür aber auch nur eindimensionale Codes oder Barcodes. Kamerabasierte Codeleser kommen problemlos auch mit zweidimensionalen Codearten zurecht, aber die je nach Anwendung zeitkritische Segmentierung und Bildauswertung erfordert einigen Aufwand, weshalb Codescanner weiterhin ihre Einsatzfelder finden.

In einer wichtigen Anwendungsgruppe werden die Code tragenden Objekte an dem Codeleser vorbei gefördert. Ein Codescanner erfasst dabei die jeweils nacheinander in seinen Lesebereich geführten Codes. Mit einem zweidimensionalen Bildsensor werden regelmäßig Bilder aufgenommen, die sich je nach Aufnahmefrequenz und Fördergeschwindigkeit mehr oder weniger überlappen. Für eine Zeilenkamera ist eine derartige Relativbewegung sogar Voraussetzung, dass überhaupt ein zweidimensionales Bild entsteht. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen.

Die EP 1 645 839 B1 offenbart eine Erfassung von durch das Gesichtsfeld eines optischen Sensors bewegten Objekten. Dabei werden Abstände zu den Objekten mit einem Entfernungsmesser bestimmt und interessierende Bereiche mit optischen Codes selektiert. Die EP 2 026 033 B1 verbessert die Datenübertragung der interessierenden Bereiche. In diesen beiden Dokumenten wird aber das eigentliche Codelesen nicht tiefergehend diskutiert.

In jüngster Zeit ist eine neuartige Kameratechnik entstanden, die sogenannte ereignis- oder eventbasierte Kamera. Dies wurde aber bisher in keinen Zusammenhang mit dem Lesen optischer Codes gebracht. Eine herkömmliche Kamera belichtet mit einer regelmäßigen Bildwiederholrate alle ihre Pixel und liest sie dann gleichzeitig aus, um so eine der Bildwiederholrate entsprechende Anzahl stationärer zweidimensionaler Bilder pro betrachtetem Zeitraum zu gewinnen.

In einer ereignisbasierten Kamera gibt es ebenfalls eine Matrix von Pixeln, aber weder eine feste Bildwiederholrate noch ein gemeinsames Auslesen von Pixeln. Stattdessen prüft jedes Pixel einzeln, ob es eine Änderung in der Intensität feststellt. Nur in diesem Fall wird eine Bildinformation ausgegeben beziehungsweise ausgelesen, und zwar nur von diesem Pixel. Jedes Pixel ist somit eine Art unabhängiger Bewegungsdetektor. Eine erfasste Bewegung wird individuell als Ereignis gemeldet. Dadurch reagiert die ereignisbasierte Kamera äußerst schnell auf die Dynamik in der Szene. Die Bilddaten sind für das menschliche Auge nicht so intuitiv zu erfassen, weil die statischen Bildanteile fehlen, können aber bei maschinellen Auswertungen Vorteile bieten.

Eine ereignisbasierte Kamera wird beispielsweise in einem Whitepaper der Firma Prophesee beschrieben, das auf deren Internetseite abgerufen werden kann.

Aus der WO 2015/036592 A1, WO 2017/174579 A1 und WO 2018/073379 A1 sind jeweils Pixelschaltkreise für eine ereignisbasierte Kamera bekannt. In der EP 2 838 069 B1 wird ein ereignisbasierter Bildsensor für eine daran angepasste Kantendetektion und Objektklassifikation eingesetzt.

Die Arbeit von Gallego, Guillermo, Henri Rebecq, und Davide Scaramuzza, "A unifying contrast maximization framework for event cameras, with applications to motion, depth, and optical flow estimation", IEEE Int. Conf. Comput. Vis. Pattern Recog.(CVPR), Vol. 1. 2018 stellt Verfahren vor, wie sich aus den Daten einer ereignisbasierten Kamera Bewegung, Entfernungen und optischer Fluss bestimmen lassen.

Die US 2013/0335595 A1 offenbart eine Vorrichtung und ein Verfahren zur ereignisbasierten Bildverarbeitung, konkret zur Bestimmung des optischen Flusses, der im Zusammenhang mit dem Lesen von Codes von keiner besonderen Bedeutung ist.

Es ist daher Aufgabe der Erfindung, das Codelesen mit einer Kamera zu verbessern.

Diese Aufgabe wird durch ein Verfahren zum Lesen von optischen Codes nach Anspruch 1 sowie einen kamerabasierten Codeleser nach Anspruch 15 gelöst. Dabei werden Bildinformationen mit einem Bildsensor erfasst. Der Bildsensor umfasst zumindest ein Pixelelement, vorzugsweise eine Zeile oder Matrix aus zahlreichen Pixelelementen. Die Bildinformationen werden ausgewertet, um einen im Lesebereich befindlichen und mit dem Bildsensor aufgenommenen Code zu lesen.

Die Erfindung geht von dem Grundgedanken aus, Codes mit einem ereignisbasierten Bildsensor zu lesen. Somit wird statt einer herkömmlichen Kamera eine ereignisbasierte Kamera eingesetzt. Die ereignisbasierte Erfassung von Bildinformationen ermöglicht eine alternative Auswertung von optischen Codes.

Die Erfindung hat den Vorteil, dass eine mehrfache Abtastung der Bildinformationen mit einer hohen Wiederholrate erfolgt. Weiter werden nur solche Bereiche ausgelesen und damit beachtet, in denen es eine Intensitätsveränderung gibt. Redundante Daten wie ein statischer Hintergrund werden erst gar nicht aufgenommen. Ein ereignisbasierter Bildsensor ermöglicht zusätzlich zu der sehr schnellen Pixelauslöserate auch einen hohen Dynamikbereich. Der ereignisbasierte Bildsensor ist gegenüber dem Gleichlichtanteil des Hintergrundes nahezu unempfindlich, da dies keine Intensitätsänderung verursacht und deshalb kein Ereignis auslöst.

Das Pixelelement stellt bevorzugt fest, wenn sich die von dem Pixelelement erfasste Intensität ändert, und liefert genau dann ereignisbasiert eine Bildinformation. Das besondere Verhalten der Pixelelemente einer ereignisbasierten Kamera wurde einleitend schon erläutert, worauf hier nochmals Bezug genommen wird. Das Pixelelement prüft, ob sich die erfasste Intensität verändert. Nur das ist ein Ereignis, und nur bei einem Ereignis wird eine Bildinformation ausgegeben oder ausgelesen. Es ist eine Art Hysterese denkbar, bei der das Pixelelement eine definierte, zu geringfügige Änderung der Intensität noch ignoriert und nicht als Ereignis auffasst.

Das Pixelelement liefert vorzugsweise als Bildinformation eine differentielle Information, ob sich die Intensität verringert oder erhöht hat. Die aus dem Pixelelement gelesene Information ist also beispielsweise ein Vorzeichen +1 oder -1 je nach Änderungsrichtung der Intensität. Dabei kann eine Schwelle für Intensitätsänderungen gesetzt sein, bis zu denen das Pixelelement noch kein Ereignis auslöst. In einer nachgelagerten internen Repräsentation zur weiteren Auswertung kann für Zeiten, zu denen kein Ereignis erfasst wurde, der Wert 0 ergänzt werden.

Das Pixelelement liefert bevorzugt als Bildinformation eine integrierte Intensität in einem durch eine Änderung der Intensität bestimmten Zeitfenster. Hier beschränkt sich die Information nicht auf eine Richtung der Intensitätsänderung, sondern es wird in einem durch das Ereignis festgelegten Zeitfenster das einfallende Licht integriert und dadurch ein Grauwert bestimmt. Der Messwert entspricht damit demjenigen einer herkömmlichen Kamera, aber der Zeitpunkt der Erfassung bleibt ereignisbasiert und an eine Intensitätsänderung gekoppelt.

Das Pixelelement gibt Bildinformationen mit einer Aktualisierungsfrequenz von mindestens einem KHz oder sogar mindestens zehn KHz aus. Die Aktualisierungsfrequenz einer herkömmlichen Kamera ist die Bildwiederholfrequenz oder Framerate. Eine solche gemeinsame Bildwiederholfrequenz kennt die ereignisbasierte Kamera nicht, da die Pixelelemente ihre Bildinformationen einzeln und ereignisbasiert ausgeben oder auffrischen. Dabei gibt es aber extrem kurze Ansprechzeiten, die mit einer herkömmlichen Kamera nur zu immensen Kosten mit tausend oder mehr Bildern pro Sekunde erreichbar wären, bei einer ereignisbasierten immer noch möglichen Aktualisierungsfrequenz von zehn KHz oder sogar mehreren zehn KHz wäre das mit herkömmlichen Kameras technisch nicht mehr darstellbar.

Diese hohe zeitliche Auflösung hat auch den Vorteil, dass es praktisch keine Bewegungsartefakte (motion blurr) gibt. Innerhalb einer der extrem kurzen Aktualisierungsperioden, die einer herkömmlichen Belichtungszeit entspricht, bewegt sich ein Objekt nicht mehrere Pixel weiter, und deshalb wird auch kein verschmiertes Bild aufgenommen.

Der Bildsensor erzeugt bevorzugt als Bildinformation einen Datenstrom aus Ereignissen, die jeweils Koordinateninformationen des zugehörigen Pixelelements, eine Zeitinformation und eine Intensitätsinformation aufweisen. Ein herkömmlicher Datenstrom besteht aus den Intensitäts- oder Grauwerten der Pixel, und der Ortsbezug in der Bildsensorebene entsteht dadurch, dass sämtliche Pixel in geordneter Abfolge ausgelesen werden. Bei dem ereignisbasierten Bildsensor werden stattdessen vorzugsweise Datentupel je Ereignis ausgegeben, die das Ereignis zuordenbar machen. Dabei wird der Ort des zugehörigen Pixelelements, die Richtung ±1 der Intensitätsänderung und/oder die zum Ereignis gemessene Intensität sowie ein Zeitstempel festgehalten.

Vorzugsweise wird der Datenstrom durch Auffüllen mit Nullen in eine Matrix gewandelt, deren Basis durch die Anordnung der Pixelelemente auf dem Bildsensor und die Zeit gebildet ist. Für die weitere Verarbeitung ist häufig eine gewohnte Matrixdarstellung geeigneter, die aus einer Sequenz zeitlich aufeinander folgender Einzelbilder besteht, d.h. aus in der Zeit aneinandergereihten Schichten der jeweils zu einem festen Zeitpunkt aufgenommenen Intensitätsverteilung über die Pixelelemente des Bildsensors. Bei einem Matrixsensor sind diese Schichten 2D-Matrizen, bei einem Zeilensensor 1D-Matrizen und bei einem einfachen Lichtempfänger nur ein Punkt. Mit der senkrecht dazu stehenden Zeit ergibt sich eine 3D-Matrix, eine 2D-Matrix oder eine 1D-Matrix. Die Granulierung der Zeitrichtung würde herkömmlich durch die Framerate vorgegeben, bei einer ereignisbasierten Kamera kann sie viel feiner festgelegt werden. Durch die Ereignisse wird letztlich eine dünn besetzte Matrix (sparse matrix) erzeugt, der Datenstrom von dem ereignisbasierten Bildsensor entspricht einer speicher- und bandbreitensparenden Repräsentation davon.

Der Bildsensor befindet sich bevorzugt in Relativbewegung zu dem Code. Diese Relativbewegung entsteht in vielen Codeleseanwendungen durch eine Fördereinrichtung, auf der die codetragenden Objekte durch den Lesebereich des stationär montierten Codelesers gefördert werden. Alternativ wird die Kamera über den Code bewegt. Das kann durch eine Bewegung der ganzen Kamera geschehen, aber auch durch einen internen Schwenk- oder Scanmechanismus der Kamera. So lässt sich mit einer Zeile ein zweidimensionales Bild und mit einem Einzelpixel eine Zeile erfassen, ähnlich einem Codescanner. Die Relativbewegung ist vorzugsweise linear und gleichmäßig.

Es werden bevorzugt zu verschiedenen Zeitpunkten erfasste Bildinformationen gleicher Objektstrukturen identifiziert. Jede bewegte Objektstruktur, insbesondere Kante, wird zu verschiedenen Zeiten in anderen Pixelelementen als Ereignis registriert, weil sie sich relativ zu den Pixeln bewegt. In einer Matrixrepräsentation finden sich die Objektstrukturen in den verschiedenen Schichten an unterschiedlichen Stellen, verschoben entsprechend der Relativbewegung. Bei einer linearen Bewegung entstehen schräg verlaufende Linien oder Ebenen aus Kanten oder Ecken der Objektstrukturen. Diese werden später auch als Raum-Zeit-Kontinuitäten bezeichnet.

Aus den Geometrien der Objektstrukturen, insbesondere deren Breite und gegenseitigem Abstand, wird vorzugsweise die Codeinformation des Codes bestimmt. In einem Codebereich sind die in den Ereignissen registrierten Intensitätsänderungen durch sich im Lesebereich bewegende Codestrukturen verursacht, und deren Geometrie enthält die gesuchte Codeinformation. Diese Information ist genaugenommen sogar redundant erfasst und steckt mehrfach in den Raum-Zeit-Kontinuitäten. Bei einem Barcode und linearer, gleichmäßiger Relativbewegung beispielsweise sind die Raum-Zeit-Kontinuitäten zueinander parallele Ebenen, aus deren Dicke oder gegenseitigem Abstand unmittelbar die Strichbreiten und damit die Codeinformationen ausgelesen werden können. Ähnlich ist das auch bei 2D-Codes, es entsteht dabei lediglich keine parallele Ebenenschar, sondern Teilausschnitte von Ebenen auch im Winkel zueinander entsprechend den Vorgaben des 2D-Codestandards.

Die Identifizierung der gleichen Objektstrukturen erfolgt vorzugsweise durch Rekonstruieren der Relativbewegung. Die Verschiebung der Objektstrukturen zu verschiedenen Zeiten ist durch die Relativbewegung bestimmt. Somit kann die Relativbewegung genutzt werden, um die Objektstrukturen wiederzufinden, ebenso wie umgekehrt die Relativbewegung aus den miteinander identifizierten Objektstrukturen geschätzt werden kann. In Anwendung an einer Fördereinrichtung wird dessen Bewegung ohnehin meist von einem geeigneten Sensor gemessen, wie einem Encoder, beziehungsweise von einer Förderersteuerung vorgegeben, welche die jeweilige Geschwindigkeit zur Verfügung stellen kann.

Zu verschiedenen Zeitpunkten erfasste Bildinformationen werden vorzugsweise korreliert. Das ist eine Möglichkeit, Objektstrukturen in zu verschiedenen Zeitpunkten erfassten Bildinformationen wiederzufinden. Die korrelierten Bereiche müssen aber keiner bestimmten Objektstruktur entsprechen, es können beliebige Bildbereiche korreliert werden, etwa einige Zeilen, Spalten oder Teile davon. Die Korrelation liefert auch einen Zeitbezug, der anstelle einer gemessenen Relativbewegung als Schätzung dafür genutzt werden kann.

Vorzugsweise wird ein Kontrastmaß der Bildinformationen optimiert. Das ist nochmals eine alternative Möglichkeit, die zu verschiedenen Zeiten aufgenommenen Objektstrukturen einander zuzuordnen. Bei Betrachtung einer Matrixrepräsentation der Bildinformationen ergibt sich aus einem bestimmten Blickwinkel eine Überlagerung der passenden Objektstrukturen. Dieser Blickwinkel ist längs der Relativbewegung ausgerichtet, weshalb wie schon angesprochen alternativ die Relativbewegung gemessen oder durch Korrelation geschätzt werden kann. Solange aber der Blickwinkel nicht stimmt, wird auch der Kontrast verschmiert. Das ist eine anschauliche Beschreibung dafür, warum eine Kontrastoptimierung eine weitere Möglichkeit darstellt, die Information über die Relativbewegung zumindest implizit aufzufinden und auszunutzen.

Vorzugsweise wird unter Annahme einer linearen Relativbewegung eine Projektion der Matrix entsprechend der Relativbewegung erzeugt. Das ist anschaulich gerade die Betrachtung der Matrixrepräsentation der Bildinformationen aus dem passenden Blickwinkel, bei dem die zu unterschiedlichen Zeiten erfassten gleichen Objektstrukturen direkt hintereinanderliegen. Die Projektion sammelt deshalb alle Ereignisse, die zu einem Punkt einer Objektstruktur erfasst wurden, und daraus lässt sich eine Codeinformation besonders verlässlich auslesen.

Vorzugsweise wird anhand des Zeitverhaltens der von dem Bildsensor erzeugten Ereignisse die Anwesenheit eines Codes im Lesebereich erkannt. Das ist eine Vorstufe des Codelesens, in der zunächst erkannt wird, ob überhaupt ein Code im Lesebereich vorhanden ist. Das ist herkömmlich die Aufgabe der Segmentierung, die aber erfindungsgemäß entfallen kann beziehungsweise durch die ereignisbasierte Bildaufnahme ersetzt wird. Ein Code im Lesebereich erzeugt Ereignisse mit einem bestimmten Zeitverhalten. Besonders einsichtig ist das bei einem Barcode mit bekannter Modulgröße in gleichmäßiger Linearbewegung, dann sind nämlich von einem solchen Code Ereignisse gehäuft mit einer bestimmten festen Frequenz zu erwarten, die sich aus der Modulgröße und der Relativbewegung vorausberechnen lässt. Auch andere Codearten und andere Bewegungen führen zu auffälligen Mustern, die algorithmisch vorhersagbar oder jedenfalls durch Klassifikatoren oder maschinelles Lernen wiedererkennbar sind.

Es werden bevorzugt Codes mit einer Modulbreite kleiner der Pixelgröße des Pixelelements gelesen. Wenn sich ein Codemodul nur teilweise, insbesondere zur Hälfte, in den Erfassungsbereich eines Pixelelements hinein- oder von dort herausbewegt, ist das trotzdem eine Intensitätsänderung, die registriert wird. Daher ermöglicht ein ereignisbasierter Bildsensor sogar eine Subpixelauflösung, im Falle der verlässlichen Erkennung eines halb von einem Codemodul getroffenen Pixelelements eine gegenüber der physischen Auflösung in beiden Richtungen verdoppelte Auflösung.

Der Bildsensor wird bevorzugt gegenüber einer Ebene der Codes effektiv schräg gestellt. Das führt dazu, dass die Zeilen des Bildsensors einen unterschiedlichen Abstand zu der Ebene haben, beispielsweise der Ebene einer Fördereinrichtung oder einer dazu parallelen Ebene entsprechend den Deckflächen von geförderten Objekten, und somit die Objektstrukturen zumindest für einige Zeilen in den Tiefenschärfenbereich fallen oder diesem wenigstens näherkommen. Wegen der Relativbewegung wird eine Objektstruktur mehrfach in verschiedenen Zeilen aufgenommen, so dass zumindest einige Ereignisse mit besserer Fokussierung aufgenommen werden. Das Schrägstellen ist durch physisches Schrägstellen der Kamera, aber auch eine Optik wie einen optischen Keil möglich.

Vorzugsweise werden zusätzlich Bildinformationen des Lesebereichs mit einem nicht ereignisbasierten Bildsensor erfasst. Die ereignisbasierte Kamera wird also mit einer herkömmlichen Kamera kombiniert. Dabei ist denkbar, dass beide System unabhängig voneinander arbeiten und anschließend die Leseergebnisse verglichen oder ergänzt werden. Es kann aber auch schon auf Ebene der Bildinformationen eine Fusion stattfinden, auf die ein Leseversuch mit verbesserten Aussichten auf eine Decodierung folgt.

Aus der Bildinformation des ereignisbasierten Bildsensors wird bevorzugt ein Auslösezeitpunkt und/oder ein Parameter für den nicht ereignisbasierten Bildsensor bestimmt. Die ereignisbasierte Kamera dient in einer Ausführungsform als Triggersensor für die herkömmliche Kamera. Es wurde oben schon erläutert, dass die ereignisbasierte Kamera anhand des Zeitverhaltens der Ereignisse erkennen kann, dass sich ein Code im Lesebereich befindet, und diese Information dient besonders bevorzugt als Auslöser für die herkömmliche Kamera oder den Verbund beider Kameras. Die ereignisbasierte Kamera kann aber auch Vorabinformationen erfassen, insbesondere über die Relativbewegung, und damit Kameraparameter wie die Belichtungszeit, einen interessierenden Bereich, Zoomparameter dafür oder Parameter des Decoders wie eine Modulgröße vorgeben.

Die oben gestellte Aufgabe wird außerdem durch einen Codeleser mit einem ereignisbasierten Bildsensor mit mindestens einem Pixelelement zum Erfassen von Bildinformationen in einem Lesebereich und mit einer Auswertungseinheit gelöst, in der ein erfindungsgemäßes Verfahren zum Lesen von optischen Codes implementiert ist. Die Auswertungseinheit ist je nach Ausführungsform Teil einer Kamera des ereignisbasierten Bildsensors oder eines daran angeschlossenen Geräts, wie einer übergeordneten Steuerung oder eines sonstigen Rechners, oder sie ist auf Kamera und/oder mehrere derartige Geräte verteilt, insbesondere auch innerhalb eines Netzwerks oder einer Cloud.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine dreidimensionale Darstellung eines kamerabasierten Codelesers über einem Förderband mit codetragenden Objekten;
- Fig. 2: eine beispielhafte Intensitätsverteilung eines Pixels zur Erläuterung von ereignisbasierter Erfassung von Bildinformation;
- Fig. 3: eine dreidimensionale Darstellung der von einem ereignisbasierten Bildsensor während einer Bewegung eines optischen Codes gelieferten Bildinformation;
- Fig. 4: eine Draufsicht auf die in Figur 3 gezeigte Bildinformation längs der Bewegungsrichtung;
- Fig. 5: eine dreidimensionale Ansicht von mit einem ereignisbasierten Bildsensor aufgenommenen Bildinformationen ähnlich Figur 3 für einen Barcode;

- Fig. 6: eine Seitenansicht auf die Bildinformationen gemäß Figur 5;
- Fig. 7: eine Draufsicht auf die mit einem ereignisbasierten Bildsensor aufgenommenen Bildinformationen eines Barcodes längs einer noch nicht zutreffend geschätzten Bewegungsrichtung bei schwachem Kontrast;
- Fig. 8: eine Draufsicht wie in Figur 7 nun bei optimiertem Kontrast und zutreffend geschätzter Bewegungsrichtung;
- Fig. 9a: Ausschnitte einiger Module eines mit einem ereignisbasierten Bildsensor aufgenommenen Barcodes zur Erläuterung einer Subpixelauflösung;
- Fig. 9b: eine sich aus Figur 9a ergebende Intensitätsveränderung und die dadurch ausgelösten Ereignisse;
- Fig. 10: eine dreidimensionale Darstellung ähnlich Figur 1, jedoch nun mit einem Verbund einer herkömmlichen und einer ereignisbasierten Kamera zum Codelesen;
- Fig. 11a: eine effektive Schrägstellung der ereignisbasierten codelesenden Kamera gegenüber dem Lesebereich mit Hilfe eines optischen Keils; und
- Fig. 11b: eine tatsächliche Schrägstellung der ereignisbasierten codelesenden Kamera.

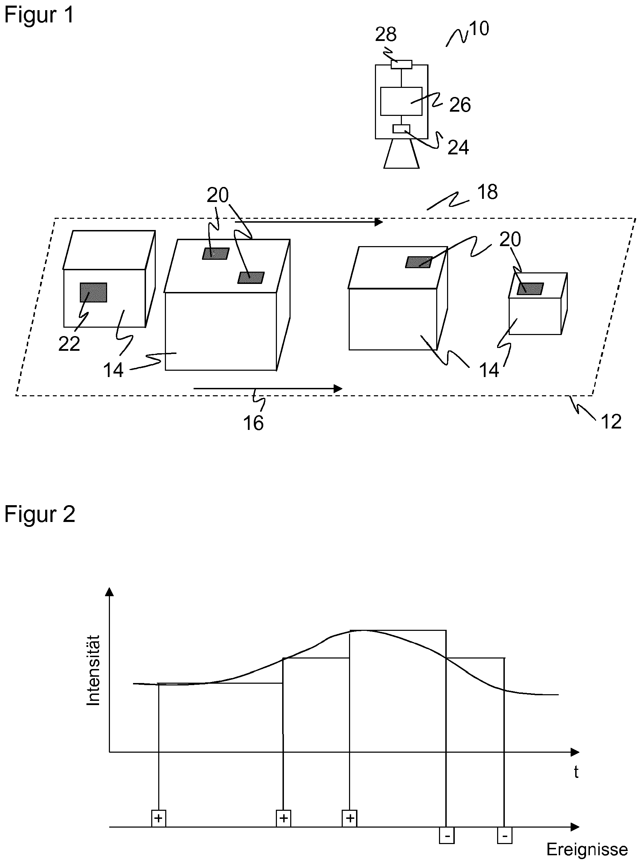

Figur 1 zeigt einen optoelektronischen Codeleser 10, der über einem Förderband 12 montiert ist, welches Objekte 14, wie durch den Pfeil 16 angedeutet, durch den Lesebereich 18 des Codelesers 10 fördert. Die Objekte 14 tragen an ihren Außenflächen Codebereiche 20, die von dem Codeleser 10 erfasst und ausgewertet werden. Diese Codebereiche 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Die Anordnung der mehreren Codeleser 10 zu einem Lesesystem erfolgt in der Praxis meist als Lesetunnel. Diese stationäre Anwendung des Codelesers 10 an einem Förderband ist in der Praxis sehr häufig. Die Erfindung bezieht sich aber zunächst auf den Codeleser 10 selbst und dessen Codeleseverfahren, so dass dieses Anwendungsbeispiel nicht einschränkend verstanden werden darf.

Der Codeleser 10 erfasst mit einem Bildsensor 24 Bildinformationen der geförderten Objekte 14 und der Codebereiche 20. Dieser Bildsensor 24 ist ein eventbasierter Bildsensor, und weiter unten werden unter Bezugnahme auf die Figuren 2 bis 11 die Besonderheiten eines eventbasierten Bildsensors und der Auswertung von dessen Bildinformationen zum Codelesen näher erläutert. Ereignisbasierte Kameras benötigen Dynamik in der aufgenommenen Szenerie, da ansonsten keine Ereignisse registriert werden. Fließbandanwendungen sind daher eine geeignete Anwendung, da eine Bewegung der aufzunehmenden Objekte 14 und Codebereiche 20 sichergestellt ist.

Das optische Erfassungsprinzip mit dem Bildsensor 24 ist auf keine besondere Geometrie und keinen bestimmten Kameraaufbau festgelegt. Der Bildsensor 24 umfasst in der Regel eine Matrix- oder Zeilenanordnung von Pixelelementen und erfasst auf einmal oder sukzessive durch Zusammenfügen von Bildinformationen im Laufe der Bewegung der Objekte 14 auf dem Förderband 12 einen zweidimensionalen Lesebereich 18. Es ist auch denkbar, einen Bildsensor 24 mit nur einem Pixelelement oder einer Zeilenanordnung von Pixelelementen mit einem Scanmechanismus zu kombinieren und so effektiv eine Zeile beziehungsweise Fläche zu erfassen.

Hauptaufgabe des Codelesers 10 ist, die Codebereiche 20 zu erkennen und die dort angebrachten Codes auszulesen. Dazu ist eine Auswertungseinheit 26 mit dem Bildsensor 24 verbunden, die dessen Bildinformationen ausliest und mittels Bildauswertung und Decodierverfahren weiterverarbeitet. Je nach Ausführungsform des Codelesers 10 kann die Auswertungseinheit 26 mit Barcodes und/oder diversen 2D-Codes umgehen. Über eine Schnittstelle 28 gibt der Codeleser 10 Informationen aus, wie gelesene Codes oder Bildinformationen. Die Funktionalität der Auswertungseinheit 26 kann auch unter Ausnutzen der Schnittstelle 28 zumindest teilweise extern vorgesehen sein, etwa durch Anschluss an eine übergeordnete Steuerung, an ein Netzwerk oder an eine Cloud.

Figur 2 zeigt zur Erläuterung des Funktionsprinzips des ereignisbasierten Bildsensors 24 im oberen Teil einen rein beispielhaften zeitlichen Intensitätsverlauf in einem Pixelelement des Bildsensors 24. Ein herkömmlicher Bildsensor würde diesen Intensitätsverlauf über ein vorgegebenes Belichtungszeitfenster integrieren, die integrierten Werte aller Pixelelemente würden im Takt einer vorgegebenen Framerate ausgegeben und dann für das nächste Bild zurückgesetzt.

Das Pixelelement des ereignisbasierten Bildsensors 24 reagiert stattdessen individuell und unabhängig von einer Framerate auf eine Intensitätsänderung. Mit senkrechten Strichen sind jeweils Zeitpunkte markiert, zu denen eine Intensitätsänderung festgestellt wurde. Im unteren Teil der Figur 2 sind zu diesen Zeitpunkten Ereignisse mit Plus und Minus je nach Richtung der Intensitätsänderung dargestellt. Es ist denkbar, dass das Pixelelement nicht auf jegliche Intensitätsänderung reagiert, sondern erst, wenn eine gewisse Schwelle überschritten wird. Das Pixelelement wird ereignisbasiert zu den Zeitpunkten ausgelesen, zu denen eine Intensitätsänderung erkannt wird, und gibt dann das Vorzeichen aus. Die Bildinformationen können anschließend noch um den Wert Null zu den Zeiten ergänzt werden, in denen es kein Ereignis gab, damit ein Bild über alle Pixelelemente des Bildsensors 24 entsteht. Diese Bild zeigt anders als von herkömmlichen Bildern gewohnt nur die bewegten Kanten an, seien es Objektkonturen, Schatten oder Aufdrucke.

Neben solchen differenziellen ereignisbasierten Kameras gibt es auch integrierende ereignisbasierte Kameras. Sie reagiert ganz analog auf Intensitätsänderungen. Anstelle einer Ausgabe der Richtung der Intensitätsänderung wird aber in einem durch das Ereignis vorgegebenen Zeitfenster das einfallende Licht integriert. Dadurch entsteht ein Grauwert. Differenzielle und integrierende ereignisbasierte Kameras haben einen unterschiedlichen Hardwareaufbau, und die differenzielle ereignisbasierte Kamera ist schneller, da sie kein Integrationszeitfenster benötigt. Die weiteren Beispiele in dieser Beschreibung beziehen sich auf eine differenzielle ereignisbasierte Kamera, aber die Erfindung ist darauf nicht beschränkt. Überhaupt ist die Technologie einer ereignisbasierten Kamera nicht Gegenstand, sondern Voraussetzung der Erfindung, und es wird ergänzend auf die einleitend genannte Patentliteratur und wissenschaftliche Literatur verwiesen.

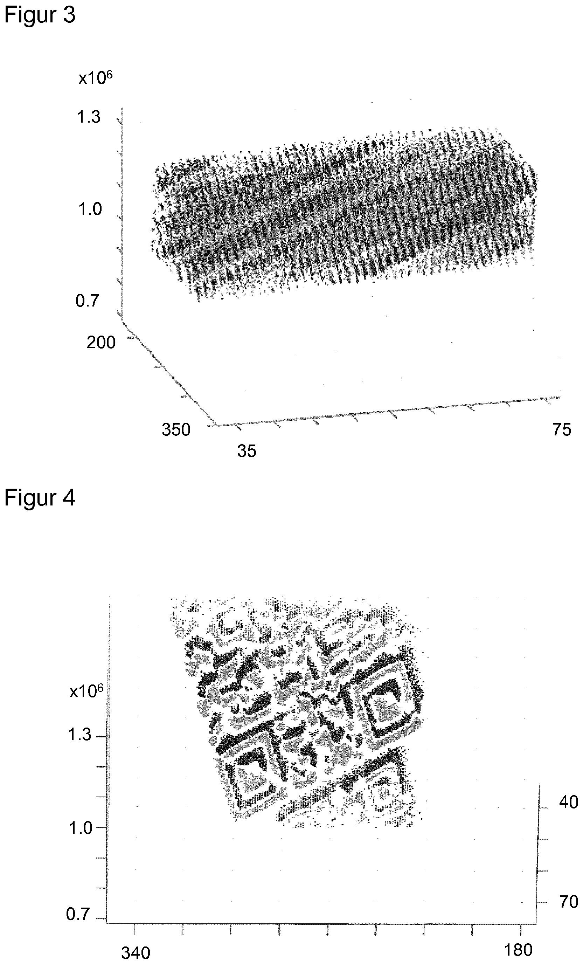

Figur 3 zeigt eine mögliche Repräsentation der von dem ereignisbasierten Bildsensor 24 gelieferten Bildinformationen. Das Beispiel wurde von einem Codeleser 10 mit matrixförmigem ereignisbasierten Bildsensor 24 aufgenommen, durch dessen Lesebereich 18 ein optischer Code linear und gleichmäßig bewegt wurde, wie dies auf einem Förderband 12 in typischer Anwendung der Fall ist.

Durch die ereignisbasierte Erfassung von Bildinformationen entsteht ein dünn besetzter (sparse) dreidimensionaler Datensatz, da für eine feste Zeit anders als bei einer herkömmlichen Kamera nicht jedes Pixelelement eine Bildinformation liefert, sondern nur diejenigen, die ein Ereignis in Form einer Intensitätsänderung registrieren. Zwei Dimensionen des Datensatzes entsprechen der Pixelanordnung auf dem Bildsensor 24, die dritte Dimension ist die Zeit vorzugsweise mit extrem hoher Zeitauflösung im Bereich höchstens weniger Mikrosekunden oder noch darunter. Die in der Matrix gespeicherten Werte sind bei differenziellem ereignisbasiertem Bildsensor 24 die Vorzeichen der Intensitätsänderung, bei integrierendem ereignisbasiertem Bildsensor 24 die Grauwerte, jeweils optional aufgefüllt mit Nullen an allen Positionen ohne Ereignis. Bei zeilen- oder punktförmiger Pixelanordnung des ereignisbasierten Bildsensors 24 reduzieren sich die Dimensionen entsprechend.

In Figur 3 ist nun die Punktwolke eines differenziellen ereignisbasierten Bildsensors 24 in einem Bildausschnitt (200,35), (350,75) gezeigt, wobei die beiden Vorzeichen durch unterschiedliche Graucodierung unterschieden sind. Es gibt erkennbare Strukturen, die sich von links unten nach rechts oben ziehen. Diese Strukturen werden auch als Raum-Zeit-Kontinuitäten bezeichnet und entstehen durch die lineare Bewegung des aufgenommenen Codes: Eine Kante im Lesebereich 18 löst zunächst zu einem Zeitpunkt t1 bei Erreichen eines Pixels (x1, y1) ein Ereignis aus, zu einem späteren Zeitpunkt t2 erneut bei einem Pixel (x2, y2), und die Pixelkoordinaten (x1, y1), (x2, y2) sowie die Zeitpunkte t1, t2 hängen über die lineare Bewegung miteinander zusammen. Folglich erzeugt die Kante in der dargestellten Punktwolke eine Linie beziehungsweise eine Eben, da die Kante in aller Regel zugleich auf mehrere Pixel fällt.

Die aufgenommene Bildinformation lässt sich besonders gut summarisch erfassen, wenn die Punktwolke aus einer Blickrichtung betrachtet beziehungsweise längs dieser Blickrichtung projiziert wird, die der linearen Bewegung und damit der Steigung der Raum-Zeit-Kontinuitäten entspricht. Dadurch werden nämlich Ereignisse zusammengefasst, die von derselben realen Objektstruktur im Lesebereich 18 stammen.

Eine entsprechende schräge Draufsicht in dieser Blickrichtung zeigt die Figur 4, und darin sind die Codestrukturen mit bloßem Auge bereits gut erkennbar und damit natürlich auch einer Bildverarbeitung zugänglich. Erkennbar wird auch die Stärke des ereignisbasierten Bildsensors 24: Das Ereignis ist lediglich mit ein Bit oder, wenn man die Null hinzunimmt, mit zwei Bit gesampelt. Die Kante wird aber mit extrem hoher Wiederholfrequenz von N Pixeln entlang der Bewegungsrichtung erfasst, so dass sich ein sehr genaues Ergebnis ableiten lässt.

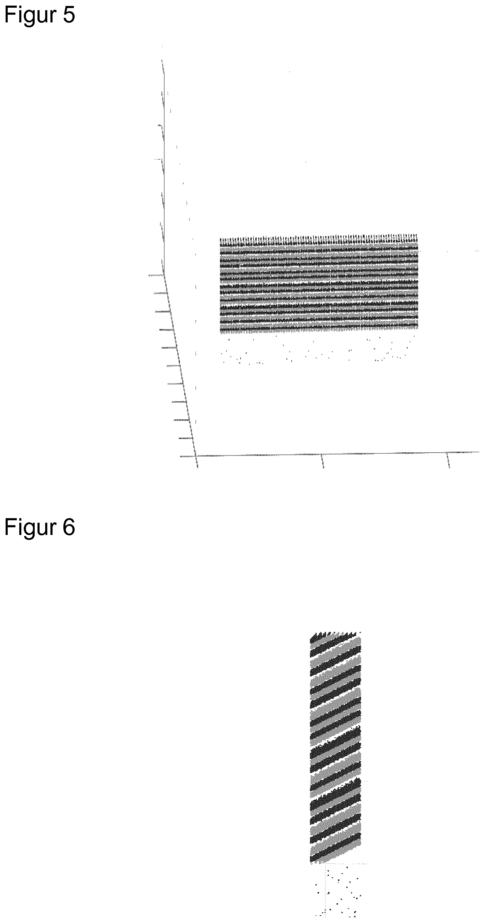

Das Codelesen mit dem ereignisbasierten Bildsensor 24 wird nun anhand des Beispiels eines Barcodes noch näher erläutert. Diese Auswertungen erfolgen vorzugsweise in Echtzeit oder jedenfalls nahezu in Echtzeit. Figur 5 zeigt zunächst die Punktwolke in einer dreidimensionalen Ansicht ähnlich Figur 3, jedoch bereits aus dem Blickwinkel längs der Bewegung und damit der Raum-Zeit-Kontinuitäten. Figur 6 zeigt eine zugehörige Seitenansicht.

Die Steigung der Raum-Zeit-Kontinuitäten entspricht bis auf Konstanten der Bewegungsgeschwindigkeit des Förderbandes 12. Diese Bewegungsgeschwindigkeit kann gemessen werden, beispielsweise mit einem Encoder am Förderband 12, oder sie wird von einer Steuerung des Förderbands 12 übergeben. Die aufgenommenen Bildinformationen enthalten aber selbst auch die Geschwindigkeitsinformation, so dass hierfür ein zusätzlicher Sensor nicht unbedingt erforderlich ist und sogar umgekehrt die Geschwindigkeit als weitere Ausgabegröße bestimmt werden kann. Statt einer quantitativen Ausgabe der Geschwindigkeit kann zumindest eine Änderung des Bewegungsverhaltens des Förderbandes 12 detektiert werden.

Eine denkbare derartige Auswertung basiert auf Korrelation. Eine Objektkontur wird im Laufe der Bewegung des Förderbandes 12 mehrfach in verschiedenen Pixelelementen von dem ereignisbasierten Bildsensor 24 erfasst. Durch Korrelation können diese Objektkonturen wiedererkannt werden, beispielsweise in unterschiedlichen Zeilen. Die Zeitdifferenz zwischen den wiederholten Erfassungen derselben Objektkontur ist ein Maß für die Geschwindigkeit der Bewegung. Um eine absolute Geschwindigkeitsinformation zu erhalten, muss das aber noch mit der Kameraoptik und der Geometrie des erfassten Objekts verrechnet werden. Für das Codelesen ist das nicht erforderlich, es genügt, die Steigung der Raum-Zeit-Kontinuität in den Einheiten der Punktwolke zu kennen.

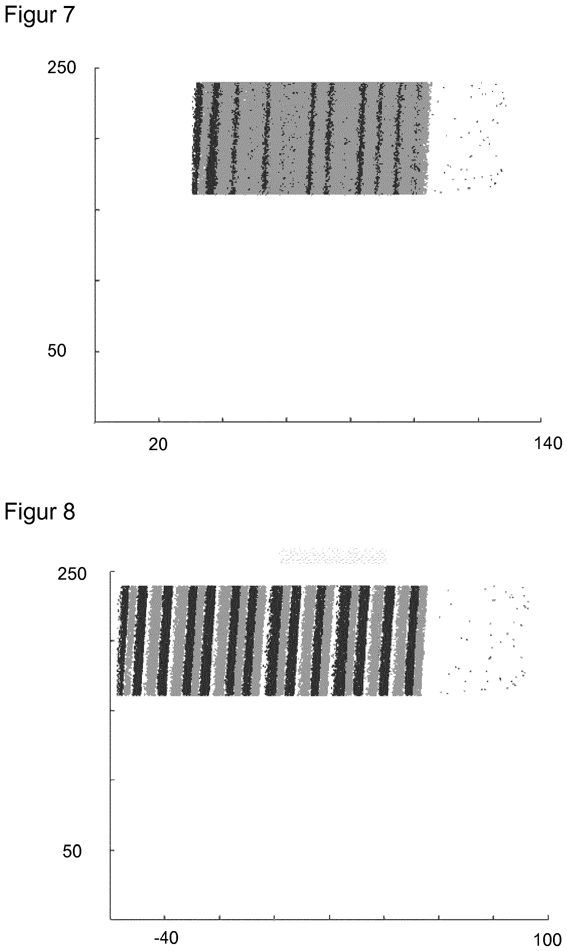

Statt einer Korrelation kann auch ein Kontrastmaß optimiert werden. Das ist in den Figuren 7 und 8 illustriert. Figur 7 zeigt eine Draufsicht auf eine Punktewolke beziehungsweise deren Projektion mit einer nicht optimalen Richtung, die also nicht der Steigung der Raum-Zeit-Kontinuitäten und damit der Bewegung des Förderbands 12 entspricht. Die Codestrukturen wirken verwaschen, der Kontrast ist nicht optimal. Figur 8 dagegen zeigt eine entsprechende Draufsicht mit optimiertem Kontrast und passender Steigung. Zwei beispielhafte Möglichkeiten zur Kontrastoptimierung sind ein Gradient-Descent-Ansatz mit Optimierung von einem geeigneten Maß wie dem Gesamtkontrast, einer lokalen Standardabweichung oder Nachbarschaftsbeziehungen, oder ein Verfahren in Analogie zu dem einleitend genannten Artikel von Gallego et al., bei dem anstelle von Winkeln die Steigung ermittelt wird.

Bei bekannter Steigung der Raum-Zeit-Kontinuitäten, sei es durch Messung der Bewegung des Förderbandes 12, durch Annahmen oder Informationen über dessen Ansteuerung oder durch eigene Auswertung mittels Korrelation, Kontrastoptimierung oder anderen Verfahren, wird die Punktwolke auf eine zweidimensionale Fläche projiziert und somit komprimiert. Die entsprechenden Darstellungen in Figur 4, 5 und 8, aber auch die Seitenansicht der Figur 6 lassen erkennen, dass die Bildinformationen nun einer Decodierung der Codeinformation zugänglich sind. Beispielsweise wird der relative Abstand der als Ebenen resultierenden Raum-Zeit-Kontinuitäten ermittelt, um die Breiten der Codemodule eines Barcodes und damit dessen Inhalt zu bestimmen.

Die Strukturierung der Punktwolke mittels der Raum-Zeit-Kontinuitäten ermöglicht es außerdem zu erkennen, ob überhaupt ein Codebereich erfasst ist, ohne dass Bilder segmentiert oder tiefergehend ausgewertet werden. Dazu wird beispielsweise die Zeitabfolge der Ereignisse einiger Pixelelemente analysiert, etwa in einer oder mehreren Zeilen vorzugsweise dort, wo ein Objekt 14 gemäß der Bewegung des Förderbandes 12 zuerst erfasst wird. Je nach Modulgröße eines Barcodes und Geschwindigkeit des Förderbandes 12 treten Ereignisse mit einer bestimmten Frequenz auf, und das ist ein deutlicher Hinweis darauf, dass nun ein Barcode in den Lesebereich 18 eintritt. Bei 2D-Codes ist das Verhalten nicht ganz so eindeutig, zeigt aber auch signifikante Muster gegenüber sonstigen Objekten, und deshalb kann das Zeitverhalten ebenfalls unterschieden werden, etwa durch Einlernen insbesondere mit maschinellem Lernen.

Somit ist der Codeleser 10 auch in der Lage, gezielt bei Erfassung von Codebereichen auszulösen. Andere Bildinformationen werden also gar nicht erst tiefer ausgewertet, beispielsweise ein Decoder nur aktiviert und damit ein Leseversuch nur gestartet, wenn anhand des Zeitverhaltens der Ereignisse ein Code 20 erkannt wurde.

Ist umgekehrt die Geschwindigkeit beziehungsweise die Steigung der Raum-Zeit-Kontinuitäten bekannt oder bestimmt, so lässt sich auf den ermittelten Signalfrequenzen auch die Modulgröße der erfassten Codes bestimmen, was für den Decoder ein hilfreicher Parameter ist.

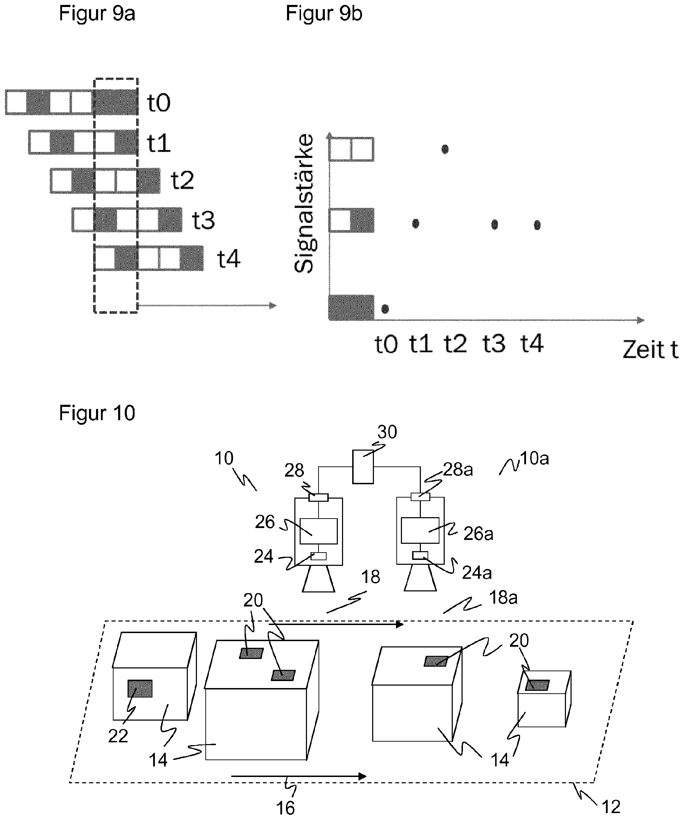

Figur 9a-b illustriert, dass mit einem ereignisbasierten Bildsensor 24 auch eine Subpixelauflösung möglich ist, also auch Modulgrößen kleiner ein Pixel erfasst werden können, beispielsweise 0.5 Pixel. Figur 9a zeigt die Bewegung einer Codestruktur durch den mit einem Rechteck angedeuteten Erfassungsbereich eines Pixelelements für verschiedene Zeiten t0 bis t4. Das Pixelelement hat eine Ausdehnung, die hier rein beispielhaft doppelt so groß ist wie die kleinste Codestruktur. Dennoch ändert sich die Intensität auch dann, wenn beispielsweise wie vom Zeitpunkt t0 zum Zeitpunkt t1 eine dunkle Codestruktur nicht mehr ganz, sondern nur noch halb erfasst wird. Deshalb löst auch das ein Ereignis aus.

Die Unterscheidung im Subpixelbereich ist in Figur 9b für die Zeitpunkte t0 bis t4 gezeigt, hier für den Fall einer integrierenden ereignisbasierten Kamera, aber analog unterscheidet auch eine differenzielle ereignisbasierte Kamera diese Ereignisse. Im Gegensatz zur herkömmlichen Herangehensweise bei Superresolution, mehrere unterschiedliche Bilder zu benutzen, um Modulgrößen feiner als die Pixelausdehnung aufzulösen, geschieht dies bei einem ereignisbasierten Bildsensor 24 mit den davon erfassten Raum-Zeit-Kontinuitäten intrinsisch.

Figur 10 zeigt eine weitere Ausführungsform eines Codelesers 10, der nun mit einem herkömmlichen Codeleser 10a kombiniert wird. Der herkömmliche Codeleser 10a weist in der Darstellung der Einfachheit halber und rein beispielhaft den gleichen Aufbau mit Lesebereich 18a, einem Bildsensor 24a, einer Auswertungseinheit 26a und einer Schnittstelle 28a auf. Allerdings ist der Bildsensor 24a kein ereignisbasierter Bildsensor, obwohl natürlich auch Mehrfachanordnungen von erfindungsgemäßen Codelesern 10 denkbar wären. Die beiden Codeleser 10, 10a sind direkt oder über eine Steuerung 30 miteinander verbunden. Eine einfache Möglichkeit der Zusammenarbeit besteht darin, dass beide Codeleser 10, 10a versuchen, Codes zu lesen, und die Leseergebnisse anschließend verglichen werden.

Mit einem bereits angesprochenen Encoder, alternativ durch Geschwindigkeitsbestimmung des Codelesers 10, ist bekannt, wo sich die Objekte 14 zu jedem Zeitpunkt befinden, so dass die von den Codelesern 10, 10a erfassten Bildinformationen in Übereinstimmung gebracht werden können. In herkömmlichen Anordnungen dieser Art ist dem Codeleser 10a nicht bekannt, wann ein Objekt 14 zu erfassen ist. Deshalb werden ständig Bilder aufgenommen und vorsegmentiert. Es gibt die Möglichkeit, einen sogenannten Triggersensor in Form einer Lichtschranke, eines Lichtgitters oder eines Laserscanners einzusetzen, um Bildaufnahmen bei Eintritt eines Objekts in den Lesebereich auszulösen. Das erkennt aber auch nur Objekte 14 als solche, nicht die eigentlich relevanten Codebereiche.

Der Codeleser 10 kann nun die Aufgabe dieses Triggersensors übernehmen. Wie oben beschrieben, kann aus dem Zeitverhalten der Ereignisse darauf geschlossen werden, wann ein Codebereich erfasst ist, so dass ein solcher Triggersensor wesentlich selektiver ist. Es sind auch Hinweise an den Codeleser 10a möglich, wo sich der Codebereich innerhalb des Lesebereiche 18, 18a befindet. Durch diese Selektivität, erst recht wenn der Codeleser 10 zugleich eine Geschwindigkeitsmessung oder eine sonstige weitere Aufgabe erfüllt, ist auch der gegenüber einer Lichtschranke höhere apparative Aufwand gerechtfertigt. Anhand von Informationen über die Steigung der Raum-Zeit-Kontinuitäten können auch Parameter des Codelesers 10a optimiert werden, etwa eine Einstellung der Belichtungszeit, um Probleme mit Bewegungsartefakten zu vermeiden. Durch Informationen des Codelesers 10 über Modulgröße kann auch der Decoder des Codelesers 10a optimal eingestellt oder ein Zoom-Objektiv genutzt werden, um in den Codebereich hineinzuzoomen.

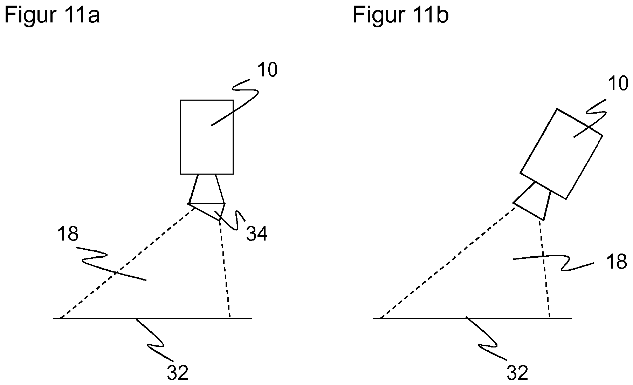

Figur 11a-b illustriert eine Möglichkeit, durch Schrägstellen des Codelesers 10 gegenüber einer Erfassungsebene 32, insbesondere der Ebene des Förderbandes 12, eine ausreichende Fokussierung sicherzustellen. Dabei wird in Figur 11a ein optischer Keil 34 benutzt, allgemein eine entsprechende Optik, und in Figur 11b der Codeleser 10 tatsächlich schräg montiert. Die Schrägstellung, egal ob effektiv wie in Figur 11a oder tatsächlich wie in Figur 11b, führt dazu, dass die Zeilen der Pixelelemente des ereignisbasierten Bildsensors 24 unterschiedliche lange Lichtwege zu den aufgenommenen Objektstrukturen haben. Daher durchläuft ein Code 20 mit seiner Bewegung durch den Lesebereich 18 insgesamt einen größeren Fokusbereich, so dass effektiv auch ohne Autofokus eine Erfassung über einen größeren Tiefenschärfenbereich erreicht wird.

Eine ereignisbasierte Kamera ist gegenüber Vibrationen empfindlicher als eine herkömmliche Kamera, da sie auf Änderungen der Lichtintensität reagiert. Soweit dies nicht durch geschützte Montage vermieden werden kann, ist vorstellbar, dass der Codeleser 10 solche Vibrationen selbst erkennt und algorithmisch kompensiert. Gegenüber Fremdlicht dagegen ist eine ereignisbasierte Kamera sogar deutlich robuster, da sie auf Gleichlicht praktisch gar nicht reagiert. Im Falle einer gepulsten Störlichtquelle werden Ereignisse ausgelöst. Solche Störer können algorithmisch erkannt und ausgefiltert werden. Alternativ wird die vorzugsweise vorgesehene eigene Beleuchtung des Codelesers 10 sehr schmalbandig ausgeführt, und dem ereignisbasierten Bildsensor 24 wird ein auf diese Beleuchtung abgestimmtes optisches Filter vorgeordnet.

## Patentansprüche

1. Verfahren zum Lesen von optischen Barcodes oder 2D-Codes (20), bei dem ein Bildsensor (24) mit mindestens einem Pixelelement in einem Lesebereich (18) Bildinformationen erfasst und die Bildinformationen ausgewertet werden, um einen Barcode oder 2D-Code (20) im Lesebereich (18) mit einem Decodierverfahren zu lesen,
**dadurch gekennzeichnet,**
**dass** der Bildsensor (24) ein ereignisbasierter Bildsensor (24) ist, dessen Pixelelement feststellt, wenn sich die von dem Pixelelement erfasste Intensität ändert, und genau dann ereignisbasiert eine Bildinformation liefert.

2. Verfahren nach Anspruch 1,
wobei das Pixelelement als Bildinformation eine differentielle Information liefert, ob sich die Intensität verringert oder erhöht hat, und/oder eine integrierte Intensität in einem durch eine Änderung der Intensität bestimmten Zeitfenster liefert.

3. Verfahren nach einem der vorhergehenden Ansprüche,
wobei das Pixelelement Bildinformationen mit einer Aktualisierungsfrequenz von mindestens einem KHz ausgibt oder wobei das Pixelelement Bildinformationen mit einer Aktualisierungsfrequenz von mindestens zehn KHz ausgibt.

4. Verfahren nach einem der vorhergehenden Ansprüche,
wobei der Bildsensor (24) als Bildinformation einen Datenstrom aus Ereignissen erzeugt, die jeweils Koordinateninformationen des zugehörigen Pixelelements, eine Zeitinformation und eine Intensitätsinformation aufweisen.

5. Verfahren nach einem der vorhergehenden Ansprüche,
wobei sich der Bildsensor (24) in Relativbewegung zu dem Code (20) befindet.

6. Verfahren nach einem der vorhergehenden Ansprüche,
wobei zu verschiedenen Zeitpunkten erfasste Bildinformationen gleicher Objektstrukturen durch Rekonstruieren der Relativbewegung identifiziert werden.

7. Verfahren nach Anspruch 6,
wobei aus den Geometrien der Objektstrukturen die Codeinformation des Codes (20) bestimmt wird.

8. Verfahren nach einem der vorhergehenden Ansprüche,
wobei zu verschiedenen Zeitpunkten erfasste Bildinformationen korreliert werden und/oder wobei ein Kontrastmaß der Bildinformationen optimiert wird.

9. Verfahren nach einem der vorhergehenden Ansprüche,
wobei unter Annahme einer linearen Relativbewegung zwischen Bildsensor (24) und Code (20) eine Projektion der Matrix entsprechend der Relativbewegung erzeugt wird.

10. Verfahren nach einem der vorhergehenden Ansprüche,
wobei anhand des Zeitverhaltens der von dem Bildsensor (24) erzeugten Ereignisse die Anwesenheit eines Codes (20) im Lesebereich (18) erkannt wird.

11. Verfahren nach einem der vorhergehenden Ansprüche,
wobei Codes (20) mit einer Modulbreite kleiner der Pixelgröße des Pixelelements gelesen werden.

12. Verfahren nach einem der vorhergehenden Ansprüche,
wobei der Bildsensor (24) gegenüber einer Ebene (32) der Codes (20) effektiv schräg gestellt wird.

13. Verfahren nach einem der vorhergehenden Ansprüche,
wobei zusätzlich Bildinformationen des Lesebereichs (18) mit einem nicht ereignisbasierten Bildsensor (24a) erfasst werden.

14. Verfahren nach Anspruch 13,
wobei aus der Bildinformation des ereignisbasierten Bildsensors (24) ein Auslösezeitpunkt und/oder ein Parameter für den nicht ereignisbasierten Bildsensor (24a) bestimmt wird.

15. Codeleser (10) mit einem ereignisbasierten Bildsensor (24) mit mindestens einem Pixelelement zum Erfassen von Bildinformationen in einem Lesebereich (18) und mit einer Auswertungseinheit (26), in der ein Verfahren zum Lesen und Decodieren von optischen Codes (20) nach einem der vorhergehenden Ansprüche implementiert ist.

## Claims

1. A method of reading optical bar codes or 2D codes (20), wherein an image sensor (24) having at least one pixel element detects image information in a reading zone (18) and wherein the image information is evaluated in order to read a bar code or 2D code (20) in the reading zone (18) using a decoding method,
**characterized in that** the image sensor (24) is an event-based image sensor (24) whose pixel element determines when the intensity detected by the pixel element changes, and then and only then provides image information in an event-based manner.

2. The method in accordance with claim 1,
wherein the pixel element provides, as the image information, differential information on whether the intensity has decreased or increased and/or an integrated intensity in a time window determined by a change of the intensity.

3. The method in accordance with any of the preceding claims,
wherein the pixel element provides image information having an update frequency of at least one KHz, or wherein the pixel element provides image information having an update frequency of at least ten KHz.

4. The method in accordance with any of the preceding claims,
wherein the image sensor (24) generates a data stream of events as image information that respectively have coordinate information of the associated pixel element, time information, and intensity information.

5. The method in accordance with any of the preceding claims,
wherein the image sensor (24) is in a relative motion with the code.

6. The method in accordance with any of the preceding claims,
wherein image information of the same object structures detected at different points in time is identified by reconstructing the relative motion.

7. The method in accordance with claim 6,
wherein the code information of the code (20) is determined from the geometries of the object structures.

8. The method in accordance with any of the preceding claims,
wherein image information detected at different points in time is correlated and/or wherein a contrast measure of the image information is optimized.

9. The method in accordance with any of the preceding claims,
wherein a projection of the matrix corresponding to the relative motion is generated under the assumption of a linear relative motion between the image sensor (24) and the code (20).

10. The method in accordance with any of the preceding claims,
wherein the presence of a code (20) in the reading zone (18) is detected with reference to the time behavior of the events generated by the image sensor (24).

11. The method in accordance with any of the preceding claims,
wherein codes (20) are read having a module width smaller than the pixel size of the pixel element.

12. The method in accordance with any of the preceding claims,
wherein the image sensor (24) is effectively slanted with respect to a plane (32) of the code (20).

13. The method in accordance with any of the preceding claims,
wherein image information of the reading zone (18) is additionally detected using a non-event based image sensor (24a).

14. The method in accordance with claim 13,
wherein a trigger point in time and/or a parameter for the non-event based image sensor (24a) is determined from the image information of the event-based image sensor (24).

15. A code reader (10) having an event-based image sensor (24) having at least one pixel element for detecting image information in a reading zone (18) and having an evaluation unit (26), with a method for reading and decoding optical codes (20) according to any of the preceding claims being implemented therein.

## Revendications

1. Procédé de lecture de codes à barres ou de codes 2D (20) optiques, dans lequel un capteur d'images (24) ayant au moins un élément pixel acquiert des informations d'image dans une zone de lecture (18), et les informations d'image sont évaluées pour lire un code à barres ou un code 2D (20) dans la zone de lecture (18) par un procédé de décodage,
**caractérisé en ce que**
le capteur d'images (24) est un capteur d'images (24) orienté événement dont l'élément pixel détecte si l'intensité saisie par l'élément pixel change, et fournit alors précisément dans ce cas, en étant orienté événement, une information d'image.

2. Procédé selon la revendication 1, dans lequel l'élément pixel fournit en tant qu'information d'image une information différentielle indiquant si l'intensité a diminué ou augmenté, et/ou fournit une intensité intégrée dans une fenêtre de temps déterminée par un changement d'intensité.

3. Procédé selon l'une des revendications précédentes, dans lequel l'élément pixel fournit des informations d'image avec une fréquence de mise à jour d'au moins un KHz, ou l'élément pixel fournit des informations d'image avec une fréquence de mise à jour d'au moins dix KHz.

4. Procédé selon l'une des revendications précédentes, dans lequel le capteur d'images (24) génère en tant qu'information d'image un flux de données à partir d'événements comprenant respectivement des informations de coordonnées de l'élément pixel associé, une information de temps et une information d'intensité.

5. Procédé selon l'une des revendications précédentes, dans lequel le capteur d'images (24) est en mouvement relatif par rapport au code (20).

6. Procédé selon l'une des revendications précédentes, dans lequel des informations d'image relatives à des structures d'objet identiques et acquises à des moments différents sont identifiées par reconstitution du mouvement relatif.

7. Procédé selon la revendication 6, dans lequel l'information du code (20) est déterminée à partir des géométries des structures d'objet.

8. Procédé selon l'une des revendications précédentes, dans lequel des informations d'image acquises à des moments différents sont corrélées, et/ou une mesure de contraste des informations d'image est optimisée.

9. Procédé selon l'une des revendications précédentes, dans lequel un mouvement relatif linéaire étant supposé entre le capteur d'images (24) et le code (20), une projection de la matrice est générée en correspondance du mouvement relatif.

10. Procédé selon l'une des revendications précédentes, dans lequel la présence d'un code (20) dans la zone de lecture (18) est détectée sur la base du comportement dans le temps des événements engendrés par le capteur d'images (24).

11. Procédé selon l'une des revendications précédentes, dans lequel des codes (20) sont lus qui ont une largeur de module inférieure à la taille de l'élément pixel.

12. Procédé selon l'une des revendications précédentes, dans lequel le capteur d'images (24) est effectivement mis en oblique par rapport à un plan (32) des codes (20).

13. Procédé selon l'une des revendications précédentes, dans lequel des informations d'image de la zone de lecture (18) sont en supplément acquises avec un capteur d'images (24a) non orienté événement.

14. Procédé selon la revendication 13, dans lequel un moment de déclenchement et/ou un paramètre pour le capteur d'images (24a) non orienté événement est déterminé à partir de l'information d'image du capteur d'images (24) orienté événement.

15. Lecteur de codes (10) comportant un capteur d'images (24) orienté événement ayant au moins un élément pixel pour l'acquisition d'informations d'image dans une zone de lecture (18), et comportant une unité d'évaluation (26) dans laquelle un procédé de lecture et de décodage de codes optiques (20) selon l'une des revendications précédentes est mis en œuvre.
